# EUROPEAN PATENT SPECIFICATION

(11) **EP 2 368 378 B1**
(45) Date of publication and mention of the grant of the patent: **20.02.2019**
(21) Application number: 09832372.8
(22) Date of filing: 25.11.2009
(51) Int. Cl.: H04W 4/24, H04W 4/12, H04W 88/02, H04M 15/00, H04M 17/00, H04W 4/14

(54) **ROUTING SYSTEM THAT ENABLES CHARGING FOR APPLICATION-TO-APPLICATION ROUTING OF MESSAGES FORMATTED IN A MOBILE PHONE MESSAGING STANDARD**
ROUTING-SYSTEM MIT ABRECHUNGSFUNKTION FÜR DAS ROUTING VON IN EINEM MOBILTELEFON-NACHRICHTENÜBERMITTLUNGSSTANDARD FORMATIERTEN NACHRICHTEN ZWISCHEN ANWENDUNGEN
SYSTÈME D'ACHEMINEMENT QUI PERMET LE CHARGEMENT POUR UN ACHEMINEMENT D'APPLICATION À APPLICATION DE MESSAGES FORMATÉS DANS UN STANDARD DE MESSAGERIE DE TÉLÉPHONIE MOBILE

(30) Priority: 25.11.2008 US 323408
(43) Date of publication of application: 28.09.2011
(73) Proprietor: T-Mobile USA, Inc., Bellevue, WA 98006-1350 (US)
(72) Inventor: YANG, Jianchong, Bellevue WA 98006-1350 (US)
(74) Representative: Grünecker Patent- und Rechtsanwälte PartG mbB
(86) International application number: PCT/US2009/065966
(87) International publication number: WO 2010/068505

(56) References cited:
- EP-A1- 1 418 743
- EP-A1- 1 458 200
- EP-A2- 1 784 028
- US-A1- 2001 046 856
- US-A1- 2003 091 170
- US-A1- 2005 278 620
- US-A1- 2006 040 684
- US-A1- 2008 009 263
- US-A1- 2008 287 106

## Description

### BACKGROUND

By some measures, Short Message Service (SMS) text messaging is one of the most widely used data applications on the planet. Despite limitations such as message size, SMS messaging has become the standard to allow a user of a mobile device to send a short text message to another user of a mobile device. More recently, Multimedia Message Service (MMS) messaging has been adopted to enable users to send messages containing multimedia objects. When an SMS or an MMS message is sent between users, a telecommunications carrier associated with the sender's mobile device will typically charge for the message to be sent, and a telecommunications carrier associated with the recipient's mobile device will typically charge for the message to be received. Such charges help pay for the telecommunications network infrastructure that is necessary to allow the message to be delivered.

As the use of SMS and MMS messaging has grown, so have the variety of wired and wireless devices that are adapted to send and receive SMS and MMS messages, as well as the variety of applications that provide services via SMS or MMS messaging. For example, personal computers having a network connection can send and receive SMS and MMS messages to/from mobile phones, other personal computers, and other devices. As another example, satellite phones can send and receive text messages with other devices. Although the number and variety of devices that can send and receive messages has evolved beyond strictly mobile devices, the ability to charge for messages to and from such devices has not kept pace. That is, systems do not presently exist to track and bill for certain types of SMS and MMS message traffic. The inability to charge for certain types of messaging has hindered the development and expansion of commercial services that might otherwise take advantage of messaging in a mobile phone messaging standard.

US 2001/046856 A1 relates to mobile application part (MAP) screening. A switching node has an MAP screening module which receives an incoming SS7 message and determines whether to route this message based on MAP information. The signaling gateway includes a link interface module, LIM, for sending a receiving SS7 message over SS7 links. The LIM includes an HMDC process that performs a discrimination function for determining whether an incoming SS7 message packet requires internal processing or is simply to be through-switched, i.e., routed to another node. An MAP screening process comprises a global title translation process and an HMRT function for routing messages after screening and/or global title translation has been performed. An MAP billing system is operatively associated with the signaling gateway. The MAP billing system generates billing records based on the number of messages that are routed and thus provides a mechanism for billing based on mobile-originating SMS messages.

US 2008/287106 A1, discloses the usage of MMS messages. The sending party could be a computer system, i.e. an application server that generates SMS/MMS messages for delivery to the receiving party. With a prepaid messaging plan, once the prepaid amount is exhausted, no further messages are received by the subscriber's handset. A look-up is performed to determine whether the sending party is on a pre-approved list of mobile subscribers allowed to send messages to be received. This list is referred to as a whitelist. A corollary list may include a so-called blacklist which defines mobile subscribes explicitly denied from sending messages to the subscriber.

US 2008/0009263 A1 relates to a method and system for billing a mobile device user for services and/or products requested by the user, in which a message request is received from the mobile service that is directed to the mobile device user, and wherein the mobile phone user is charged only once for a predefined amount or number of message-related services or products.

It is the object of the present invention to provide a communication technique that saves costs and bandwidth.

This object is solved by the subject matter of the independent claims.

Preferred embodiments are defined by the dependent claims.

### BRIEF DESCRIPTION OF THE DRAWINGS

Figure 1 is a block diagram of a representative environment in which a message routing system operates.
Figure 2 is a block diagram of the components of a message routing system that enables charging for messages routed between applications.
Figure 3 is a flow chart of a screening, routing, and charging process implemented by the message routing system.
Figure 4 is a flow chart of a screening process implemented by the message routing system.

### DETAILED DESCRIPTION

A message routing system that enables charging for messages that are formatted in a mobile phone messaging standard and routed between software applications is disclosed. The mobile phone messaging standard may be, for example, the Short Message Service (SMS) standard or the Multimedia Messaging Service (MMS) standard. The routing system receives a message from a mobile device or from an application server. The routing system screens the message to determine whether the message should be delivered to a recipient. If the message passes the screening check, the routing system routes the message for delivery to a recipient mobile device or application server. The system may receive and route the message over any type of network, whether wired or wireless (using licensed or unlicensed spectrum). In accordance with configurable business rules, the routing system generates a charging data record (CDR), or any similar billing log or record, associated with the message to allow the message sender and/or message recipient to be billed for the message. The routing system thereby enables messages formatted in a mobile phone messaging standard to be delivered between any combination of devices or applications that communicate via wired or wireless networks. In particular, the system enables messages to be routed from one software application to another software application and charges to be levied for such routing in accordance with business rules. Charging for application-to-application routing is accomplished using existing mechanisms typically used to charge for mobile device-to-mobile device routing.

In some embodiments, the screening check performed by the system involves determining whether the message sender and/or the message recipient should be barred from sending/receiving messages via blacklist, white-list or similar mechanism. The system may also perform one or more routing checks to determine whether the message can be delivered to the recipient within an acceptable service level. If either the sender or the recipient utilizes a prepaid billing plan, the system may also determine whether a sufficient balance exists in the prepaid account to cover any charges associated with the message delivery. The system may also perform other screening checks to determine whether to route messages, such as routing or not routing messages based on operator preferences, based on messaging allowances (e.g., terminating messaging if the number of routed messages exceeds a threshold), based on temporal restrictions (e.g., no messages may be routed during certain hours), etc.

Various embodiments of the invention will now be described. The following description provides specific details for a thorough understanding and an enabling description of these embodiments. One skilled in the art will understand, however, that the invention may be practiced without many of these details. Additionally, some well-known structures or functions may not be shown or described in detail, so as to avoid unnecessarily obscuring the relevant description of the various embodiments. The terminology used in the description presented below is intended to be interpreted in its broadest reasonable manner, even though it is being used in conjunction with a detailed description of certain specific embodiments of the invention.

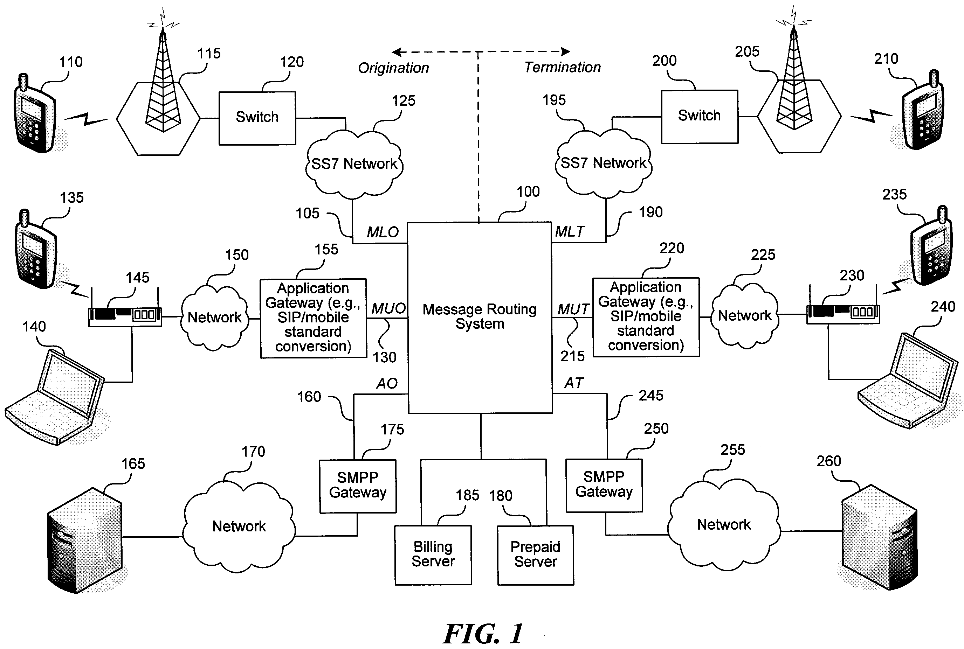

Figure 1 is a block diagram of a representative environment in which a message routing system 100 operates. The routing system 100 routes a message that is formatted in a mobile phone messaging standard from a sending device or application server to a recipient device or application server, and generates a charging data record (CDR) or similar billing log or record to bill for the message routing. The mobile phone messaging standard may be, for example, the Short Message Service (SMS) standard or the Multimedia Messaging Service (MMS) standard. Those skilled in the art will appreciate that the messaging standard may rely upon one or more underlying standards, including but not limited to SMPP, GSM, GPRS, SMTP, WAP Push, SIP, etc. Messages may be translated between different standards at different parts of the network as messages are routed through the network.

A message may be received by the system along one of three paths. A first path, identified as a Mobile Licensed Originated (MLO) path 105, originates from a mobile phone 110 or similar mobile device. A user of the mobile device generates a message and transmits the message to a switch 120 (e.g., a mobile switching center) via a cellular network 115 or other wireless access point using a licensed frequency spectrum (e.g., a picocell). The switch 120 forwards the message to the routing system 100 via an SS7 (PSTN) signaling network 125 or other similar network. A second path, identified as a Mobile Unlicensed Originated (MUO) path 130, originates from a mobile phone 135, portable computer 140, or other mobile device. A user of the mobile device generates a message and transmits the message to an application gateway 155 via an access point 145 (e.g., a WiFi router, WiMax router or other femtocell access point) and network 150. The access point may use an unlicensed wireless spectrum, and connectivity may be based on the Unlicensed Mobile Access (UMA)/General Access Network (GAN) standard. The access point may also allow a wired connection, such as via an RJ-11 or comparable jack. Communication between the mobile device and access point 145 is conducted in accordance with any appropriate wired or wireless protocols such as WiFi, WiMax, HTTP/TCP/IP, etc. Communication between the access point and the application gateway 155 is conducted in accordance with the Session Initiation Protocol (SIP) or other appropriate communication protocol. The application gateway 155 therefore converts messages of the selected protocol, such as SIP, to messages formatted in a mobile phone messaging standard before transmitting the resulting messages to the routing system 100. A third path, identified as an Application Originated (AO) path 160, originates from an application operating on a server 165 or other computing device. Application messages are generated by the application server in an automated fashion, rather than involving manual input by a user to generate each message. Applications, such as external short message entities (ESME), that may generate or receive messages include Enterprise applications (e-Mail, voicemail, CRM, ERP and workflow engines) or custom-built applications operated by a telecommunications carrier or by a third party. Originating applications may provide many types of services, such as news or alert services, stock quote services, email notification services, etc. Receiving applications may offer services such as vote counting services (to count votes cast by users), etc. Some applications may only send messages ("origination-only applications"), some applications may only receive messages ("termination-only applications"), and some applications may both send and receive messages. The application sends communication messages through a network 170 to an application gateway 175, using a standard protocol such as a short message peer-to-peer (SMPP) protocol. The application gateway translates messages formatted in the received protocol into messages formatted in accordance with a mobile phone messaging standard before transmitting the resulting messages to the routing system 100. In this fashion, the application gateway allows, for example, messages to be submitted in bulk by the application operating on the server 165. Whether received via the MLO path 105, MUO path 130, or AO path 160, the routing system 100 processes received messages for distribution to recipients.

Those skilled in the art will appreciate that Figure 1 represents only one of many potential network realizations of a messaging service infrastructure. Other appropriate realizations of a messaging service infrastructure may introduce additional reception paths to the message routing system 100 in addition to the MLO path 105, MUO path 130, or AO path 160, or may remove one or more of the indicated message paths. Moreover, those skilled in the art will appreciate that applications may send messages to the message routing system 100 either directly using any appropriate standards or indirectly via gateways using any appropriate standards.

As will be described in additional detail herein, the routing system 100 processes received messages by performing a screening check on each message, determining a routing of each message, routing each message, and generating a charging data record (CDR) or similar billing log or record to enable billing for the message routing. Only those messages that pass the screening check by the routing system are routed to the intended recipient. The screening check on each message may require communication with a prepaid server 180, to determine whether the sender and/or recipient have sufficient account resources to allow the routing to occur. A CDR is generated by the system in accordance with configurable business rules. On an immediate, periodic or random basis, CDRs that are generated by the routing system 100 are transmitted to a billing server 185. The billing server reconciles all CDRs against service plans and levies appropriate charges to the sender and/or recipient.

For a message that the routing system 100 routes to a recipient, the message formatted in a mobile phone messaging standard may be transmitted by the system along one of three paths. The three transmission paths utilized by the system are analogous to the three reception paths. A first path, identified as a Mobile Licensed Termination (MLT) path 190, terminates at a mobile phone 210 or other mobile device. The system sends messages through an SS7 (PSTN) signaling network 195 or other similar network to a switch 200 (e.g., a mobile switching center), and then to the mobile phone 210 through a cellular network 205 or other wireless access point using a licensed frequency spectrum (e.g., a picocell). A second path, identified as a Mobile Unlicensed Termination (MUT) path 215, terminates at a mobile phone 235, portable computer 240, or similar mobile device. The system 100 transmits the message to an application gateway 220, and then to the mobile phone 235, portable computer 240, or other mobile device via network 225 and access point 230 (e.g., a WiFi router, a WiMax router, or other femtocell access point). The access point may use an unlicensed wireless spectrum, and connectivity may be based on the Unlicensed Mobile Access (UMA)/General Access Network (GAN) standard. The access point may also allow a wired connection, such as via an RJ-11 or comparable jack. Communication between the application gateway 220 and the access point 230 is conducted in accordance with the Session Initiation Protocol (SIP) or other appropriate communication protocol. Communication between the access point 230 and the terminating mobile device is conducted in accordance with any appropriate wired or wireless protocols such as WiFi, WiMax, HTTP/TCP/IP. etc. The application gateway 220 therefore converts messages into the selected protocol, such as SIP, before transmitting the resulting communication to the access point. The access point converts messages to the appropriate protocol for transmission to the terminating mobile phone, portable computer, or mobile device. A third path, identified as an Application Termination (AT) path 245, terminates with an application operating on a server 260 or other computing device. Application messages are received by the application server in an automated fashion, without requiring manual acceptance by a user of each message. The system transmits messages formatted in a mobile phone messaging standard to an application gateway 250, such as a short message peer-to-peer (SMPP) gateway. The application gateway translates the messages into standard protocols, such as SMPP, and transmits the contents of the messages via communication messages to the server 260 through a network 255. Whether transmitted via the MLT path 190, MUT path 215, or AT path 245, the routing system 100 distributes received messages that pass the screening check to recipients.

Those skilled in the art will appreciate that other appropriate realizations of a messaging service infrastructure may introduce additional termination paths to the message routing system 100 in addition to the MLT path 190, MUT path 215, or AT path 245, or may remove one or more of the indicated termination paths. Moreover, those skilled in the art will appreciate that applications may receive message from the message routing system 100 either directly using any appropriate standards or indirectly via gateways using any appropriate standards.

As depicted in Figure 1, the routing system 100 allows a wide variety of routing paths, including MLO-MLT, MLO-MUT, MLO-AT, MUO-MLT, MUO-MUT, MUO-AT, AO-MLT, AO-MUT, and AO-AT. The variety of routing paths provides a significant amount of flexibility to users and application designers who use the system for the delivery of messages formatted in accordance with a mobile phone messaging standard. It will be appreciated that the depiction of separate origination and termination paths in Figure 1 is merely for clarity, and that the origination and termination paths may in some circumstances be the same physical path. For example, if mobile devices 110 and 210 are in close proximity, the cellular network 115, switch 120, and SS7 network 125 may be the same physical elements as cellular network 205, switch 200, and SS7 network 195. In other circumstances, however, the origination paths and termination paths may be different physical paths, such as when the sending device or application and the recipient device or application are operating on different telecommunication networks. It will be appreciated that in the environment depicted in Figure 1, certain message protocol translations are performed within gateways. In some embodiments, the protocol translation functions may instead be implemented and performed by the routing system 100, or by one or more other components (not shown).

Those skilled in the art will also appreciate that the environment depicted in Figure 1 is merely representative, and that various changes may be made depending on the particular architecture that is implemented by the carrier. For example, all depicted networks may be public networks, private networks, or a combination of public and private networks. As another example, the components depicted in Figure 1 are referred to using terminology common to GSM networks. Equivalent or similar components may replace those when the system is utilized in a CDMA or Digital AMPS networks. The routing system 100 may be utilized in any environment in which messages formatted in accordance with a mobile phone messaging standard are exchanged between devices and applications.

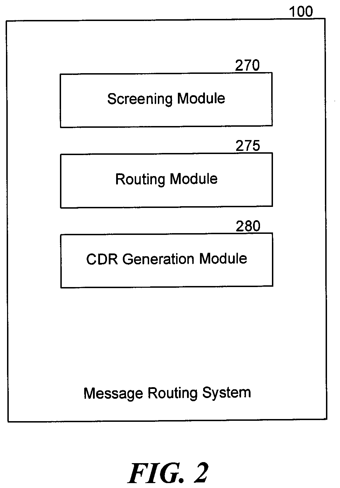

Figure 2 is a block diagram of the components of the routing system 100 that enables charging for messages routed between applications. In some embodiments, the routing system 100 is implemented in conjunction with a system that sends messages formatted in accordance with a mobile phone messaging standard directly to recipients without passing the messages through a carrier's traditional store/forward center. Such a system is referred to as a "first delivery attempt" (FDA) or "direct messaging" solution. Representative FDA systems are manufactured by mcTEL of Monaco, TeleCommunication Systems, Inc. of Annapolis, MD, and Tekelec of Morrisville, NC. For example, TeleCommunication Systems offers a FDA solution for text messages under the tradename smsExpress™ that eliminates traditional store and forward delivery of SMS messages. Instead, approximately 80% - 90% of SMS text messages are transmitted directly to addressees without routing the messages to the Short Message Service Center (SMSC) for traditional store/forward delivery. Only text messages that fail a first delivery attempt are routed to the carrier's SMSC.

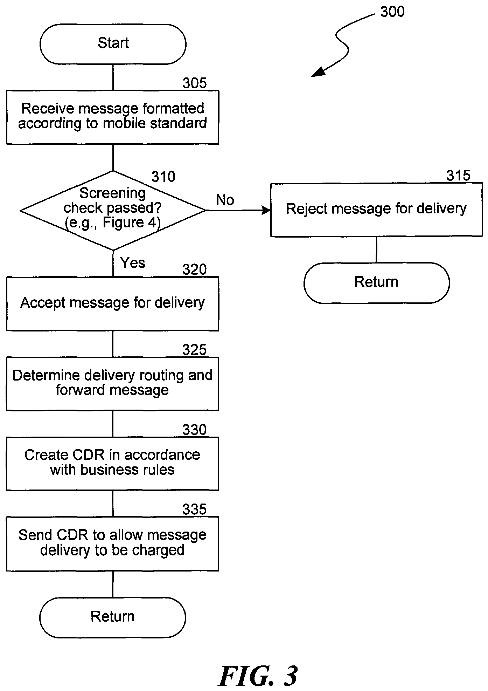

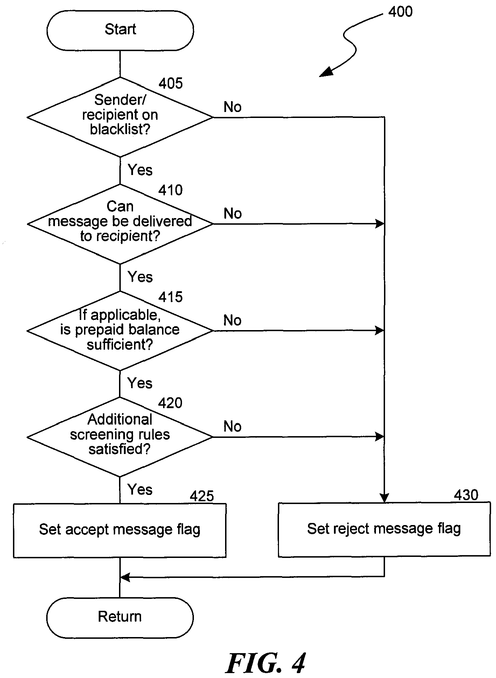

As shown in Figure 2, the routing system 100 includes a number of modules to implement the functionality described herein. A screening module 270 is used to screen an incoming message and assess whether the message should be routed to the intended recipient. A routing module 275 assesses the network location of a message recipient and determines a routing method to forward the message to the recipient. If a message is routed to a recipient, a CDR generation module 280 generates a charging data record to allow charges to be levied for the routed message. The operation of each of these modules will be described in greater detail with respect to the flow charts of Figure 3 and Figure 4.

Those skilled in the art will appreciate that the system 100 may include other appropriate modules (not shown) to implement additional desired functionality, depending on the operator's requirements for the messaging system. The system 100 may be implemented on any computing system or device. Suitable computing systems or devices include server computers, multiprocessor systems, microprocessor-based systems, network devices, minicomputers, mainframe computers, distributed computing environments that include any of the foregoing, and the like. Such computing systems or devices may include one or more processors that execute software to perform the functions described herein. Processors include programmable general-purpose or special-purpose microprocessors, programmable controllers, application specific integrated circuits (ASICs), programmable logic devices (PLDs), or the like, or a combination of such devices. Software may be stored in memory, such as random access memory (RAM), read-only memory (ROM), flash memory, or the like, or a combination of such components. Software may also be stored in one or more storage devices, such as magnetic or optical based disks, flash memory devices, or any other type of non-volatile storage medium for storing data. Software may include one or more program modules which include routines, programs, objects, components, data structures, and so on that perform particular tasks or implement particular abstract data types. The functionality of the program modules may be combined or distributed as desired in various embodiments.

Figure 3 is a flow chart of a screening, routing, and charging process 300 implemented by the message routing system 100. At a block 305, the system receives a message formatted in accordance with a mobile phone message standard that is to be routed to a recipient. As previously discussed, the message may be received via the MLO, MUO, or AO origination paths. At a decision block 310, the system performs a screening check to determine whether the message should be accepted for routing or rejected. A variety of different screening checks may be performed by the system depending on the identity of the sender, the identity of the recipient, and other factors. For example, Figure 4 is a flow chart of a representative screening process 400 that may be implemented by the message routing system 100. At a decision block 405, the system compares the identity of the sender and the identity of the recipient with a blacklist representing identities of senders and/or recipients that should not be allowed to send/receive messages. Senders or recipients may be added to the blacklist for a variety of reasons, such as if they are a known fraud risk, if they committed prior acts that violated carrier policies, if they maintain an unacceptable outstanding account balance, or for any other act or omission. If the sender or recipient of the message is identified on the blacklist, processing continues at a block 430 where the system sets a "reject message" flag to indicate that the message should be rejected. If the system does not find the sender or recipient on a blacklist at decision block 405, processing continues at a decision block 410.

At decision block 410, the system assesses whether the message is capable of being routed to the intended recipient. In order to assess whether the message is capable of being routed, the system may query a configuration entity such as a carrier's central user database (in GSM embodiments, a Home Location Register), in order to assess the location of the recipient and the ability of the recipient to receive messages. The system 100 may also check a routing configuration and application profile for the recipient in order to assess whether the recipient is configured to receive messages. For example, if the recipient is an application, the application may be an origination-only application that is not configured to receive messages. The system 100 may also check profiles associated with the sender and the recipient to determine whether the sender and/or the recipient have opted to temporarily or permanently disable messaging services based on rules/options offered by the carrier. For example, a carrier may allow a user to decline to receive any SMS or emails on a mobile device, or the carrier may allow a user to disable the sending or receipt of any messages after midnight local time but before 7 AM local time. As part of the determination of whether the message is capable of being routed, the system may also assess whether the message is likely to reach the recipient in a manner that would meet a desired quality of service (e.g., within a certain time period, having an acceptably low error rate, etc.). If the message can't be routed to the intended recipient, processing continues at block 430 where the system sets a "reject message" flag. If the system is able to route the message to a recipient at decision block 410, processing continues at a decision block 415.

At decision block 415, the system may perform a check to determine whether the sender and/or the recipient are on a prepaid service plan. If the sender and/or recipient are on a prepaid service plan, the system determines whether the current balance on the plan is sufficient to pay the charges associated with routing the message. In order to make such a determination, the system may send an inquiry to the prepaid server 180 to request an account balance or to receive confirmation that a sufficient balance exists in the applicable account to pay the associated routing charges. If the sender or recipient has insufficient funds to pay the associated charges, processing continues at block 430 where the system sets a "reject message" flag. If the sender or recipient has sufficient funds to pay the associated charges, processing continues at a decision block 420.

At decision block 420, the system may apply one or more additional screening rules to determine whether the message should be routed to the recipient. For example, the system may route or not route messages based on operator preferences, based on messaging allowances (e.g. terminating messaging if the number of routed messages exceeds a threshold), based on temporal restrictions (e.g. no messages may be sent during certain hours), etc. If the message fails one or more of the screening rules, processing continues at block 430 where the system sets a "reject message" flag. If, however, the message passes the one or more screening rules, processing continues to a block 425.

At block 425, the routing system sets an "accept message" flag. The "accept message" flag indicates that the message has passed the screening check and should be routed by the system to the recipient. Once the screening check is completed, processing returns to the screening, routing, and charging process 300.

Returning to Figure 3, at decision block 310 the message is determined to have failed the screening check if the "reject message" flag is detected by the system as being set. Under this condition, processing continues to a block 315 where the message is rejected by the system for delivery. In some circumstances, the system may send an indication to the sending device or application that the message will not be routed to the recipient. Once the message fails the screening check, further processing of the message by the system is halted. If, however, at decision block 310 the message is determined to have passed the screening check by the system detecting that the "accept message" flag has been set, processing continues to a block 320. At block 320, the system accepts the message for delivery to the recipient. When the message is accepted for delivery, the system may acknowledge the sending device or application and may send a message to the sending device or application to indicate to the device or application that message delivery will be attempted.

At a block 325, the system determines the routing necessary to route the message to its intended recipient. In some circumstances, routing rules may be provided by the configuration entity (e.g., a central user database such as a HLR) in order to allow the system to correctly forward the message to the intended recipient. The system may route the message to a recipient on one of three paths, namely the MLT, MUT, or AT termination paths. In particular, the system allows messages received from an application on the AO origination path to be routed to a different application on the AT termination path, based on a set of business rules that are associated with the particular sender, recipient, type of message, or other factor (e.g., time of day, etc.). For example, a message service reseller or portal may be allowed to send messages to and receive messages from another message service reseller or portal. Such a routing option was not commercially viable in prior routing systems due to an inability to charge for such routing. Once the routing path is determined, the system sends the message on the determined routing path to the recipient.

At a block 330, the system creates a charging data record (CDR), or any similar billing log or record that allows charging or refunding, in accordance with a set of business rules that may be associated with the particular sender, recipient, type of message, or other factor (e.g., time of day, length of message, etc.). A CDR may contain information identifying the sender, receiver, type of message, time of delivery, etc. The CDR allows a charge to be levied for any message that the system routes, regardless of the source or destination of the message. The CDRs are reconciled by billing servers to charge senders and/or recipients for the routing of the message. The billing servers may charge or not charge for message deliveries based on billing rules implemented by the billing servers. For example, a billing server may not charge for voice mail notification delivery messages. In particular, CDRs that pertain to AO-to-AT messaging may be reconciled in a similar a fashion to CDRs that pertain to the more typical MLO-to-MLT messaging.

At a block 335, the CDR associated with the message is transmitted via push or pull processes to one or more billing servers 185 for purposes of charging for the message routing. Those skilled in the art will appreciate that the system may transmit each CDR as it is generated, or the system may aggregate CDRs over a period of time and transmit groups of CDRs to the billing servers. The billing servers charge the appropriate party (whether sender, recipient, or application provider) based on the received CDRs.

From the foregoing, it will be appreciated that specific embodiments of the invention have been described herein for purposes of illustration, but that various modifications may be made without deviating from the spirit and scope of the invention. For example, the CDR for a message may be generated after the screening checks have been completed at decision block 310, but before the message is routed to the recipient at block 325. In general, the steps shown in Figures 3 and 4 may be altered in a variety of ways. The order of the steps may be rearranged, substeps may be performed in parallel, steps may be omitted, or other steps may be included. Accordingly, the invention is not limited except as by the appended claims.

## Claims

1. A system to facilitate charging for messages routed across a network, the system comprising:
a gateway (155, 175) for receiving a message from a sending application according to a communication protocol, the sending application running on a first computing device (135, 140, 165), the communication protocol being a session initiation protocol, SIP, or a short message peer-to-peer protocol, SMPP, and for converting the received message to a message formatted according to a mobile phone messaging standard and to be routed to a receiving application;
a screening module (270) for receiving the formatted message and applying one or more screening checks to the formatted message in order to determine whether the formatted message should be routed to the receiving application running on a second computing device (210, 235, 240, 260), wherein the screening checks comprise querying a configuration entity for assessing the ability of the receiving application to receive messages;
a routing module (275) for determining a routing of the formatted message to the receiving application if the screening module (270) determines that the received message should be routed to the receiving application, the routing module (275) capable of routing the received message via a wired or wireless network; and
a charging record generation module (280) for generating a charging record for the routing of the formatted message to the receiving application, the charging record enabling charges to be levied against the sending application, the receiving application, or both the sending application and the receiving application.

2. The system of claim 1, wherein the mobile phone messaging standard is the Multimedia Messaging Service, MMS, standard or the Short Message Service, SMS, standard.

3. The system of claim 1, wherein a screening check comprises determining whether the sending application or receiving application is on a blacklist or on a whitelist.

4. The system of claim 1, wherein a screening check comprises:
determining whether the sending application or receiving application is associated with a prepaid service plan; and
if the sending application or receiving application is associated with a prepaid service plan, determining whether adequate funds are present in the prepaid service plan to cover the charges that are to be levied against the sending application, the receiving application, or both the sending application and the receiving application.

5. The system of claim 1, wherein the sending application or receiving application is an enterprise application.

6. The system of claim 1, wherein the charging record is a charging data record, CDR, and the charging record generation module transmits the generated charging data record to a billing system for processing.

7. A computer-implemented method to facilitate charging for routed across a network, the computer-implemented method comprising:
Receiving, at a gateway (155, 175) a message from a sending application according to a communication protocol, the sending application running on a first computing device (135, 140, 165), the communication protocol being a session initiation protocol, SIP, or a short message peer-to-peer protocol, SMPP, and for converting the received message to a message formatted according to a mobile phone messaging standard and to be routed to a receiving application;
receiving (305) the formatted message at a screening module (270) and applying (310) one or more screening checks to the formatted message in order to determine whether the formatted message should be routed to the receiving application running on a second computing device (210, 235, 240, 260), wherein the screening checks comprise querying a configuration entity for assessing the ability of the receiving application to receive messages;
if the screening module (270) determines that the received message should be routed to the receiving application, determining (325), by a routing module (275), a routing of the received message to the receiving application via a wired or wireless network;
generating (330), by a charging record generation module (270), a charging record for the routing of the formatted message to the receiving application, the charging record enabling charges to be levied against the sending application, the receiving application, or both the sending application and the receiving application; and
transmitting (335) the charging record to a billing system for processing.

8. The computer-implemented method of claim 7, wherein the mobile phone messaging standard is the Multimedia Messaging Service, MMS, standard or the Short Message Service, SMS, standard.

9. The computer-implemented method of claim 7, wherein a screening check comprises determining whether the sending application or receiving application is on a blacklist or on a whitelist.

10. The computer-implemented method of claim 7, wherein a screening check comprises:
determining whether the sending application or receiving application is associated with a prepaid service plan; and
if the sending application or receiving application is associated with a prepaid service plan, determining (415) whether adequate funds are present in the prepaid service plan to cover the charges that are to be levied against the sending application, the receiving application, or both the sending application and the receiving application.

11. The computer-implemented method of claim 7, wherein the sending application or receiving application is an enterprise application.

12. The computer-implemented method of claim 7, wherein the charging record is immediately transmitted to the billing system for processing.

13. The computer-implemented method of claim 7, wherein the charging record is delayed before being transmitted to the billing system for processing.

14. The computer-implemented method of claim 7, wherein the charging record is a charging data record, CDR.

15. A computer-readable storage medium containing instructions that, when executed by one or more processors, direct the one or more processors to perform a method according to one of claims 7 to 14.

## Patentansprüche

1. System zum Erleichtern der Abrechnung von Nachrichten, die über ein Netzwerk geleitet werden, wobei das System umfasst:
ein Gateway (155, 175) zum Empfangen einer Nachricht von einer Versendeanwendung gemäß einem Kommunikationsprotokoll, wobei die Versendeanwendung auf einer ersten Rechneranwendung (135, 140, 165) läuft, das Kommunikationsprotokoll ein Sitzungseinleitungsprotokoll (SIP = session initiation protocol) oder ein Kurznachrichten-Peer-To-Peer-Protokoll (SMPP) ist, und zum Umwandeln der erhaltenen Nachricht in eine gemäß einem Mobiltelefon-Benachrichtigungsstandard formatierte und zu einer Empfangsanwendung zu leitende Nachricht;
ein Screening-Modul (270) zum Empfangen der formatierten Nachricht und zum Unterziehen der formatierten Nachricht einer oder mehrerer Screening-Prüfungen, um zu bestimmen, ob die formatierte Nachricht zu der auf einer zweiten Rechnervorrichtung (210, 235, 240, 260) laufenden Empfangsanwendung geleitet werden soll, wobei die Screening-Prüfungen das Abfragen einer Konfigurationsentität zum Beurteilen der Fähigkeit der Empfangsanwendung, Nachrichten zu empfangen, umfasst;
ein Routing-Modul (275) zum Bestimmen eines Routings der formatierten Nachricht zu der Empfangsanwendung, wenn das Screening-Modul (270) bestimmt, dass die erhaltene Nachricht zu der Empfangsanwendung geleitet werden soll, wobei das Routing-Modul (275) zum Routen der empfangenen Nachricht über ein verdrahtetes oder drahtloses Netzwerk geeignet ist; und
ein Modul (280) zur Abrechnungsaufzeichnungserstellung, um eine Abrechnungsaufzeichnung für das Routing der formatierten Nachricht zu der Empfangsanwendung zu erstellen, wobei die Abrechnungsaufzeichnung ermöglicht, dass gegenüber der Versendeanwendung, der Empfangsanwendung oder beiden, d.h. der Versendeanwendung und der Empfangsanwendung, Gebühren erhoben werden.

2. System nach Anspruch 1, wobei der Mobiltelefon-Benachrichtigungsstandard der Multimedia Messaging Service-Standard (MMS-Standard) oder der Short Message Services-Standard (SMS-Standard) ist.

3. System nach Anspruch 1, wobei eine Screening-Prüfung die Bestimmung umfasst, ob die Versendeanwendung oder die Empfangsanwendung auf einer Negativliste oder einer Positivliste steht.

4. System nach Anspruch 1, wobei eine Screening-Prüfung umfasst:
Bestimmen, ob die Versendeanwendung oder die Empfangsanwendung mit einem Prepaid-Servicekonzept in Verbindung steht; und
wenn die Versendeanwendung oder die Empfangsanwendung mit einem Prepaid-Serviceplan in Verbindung steht, Bestimmen, ob in dem Prepaid-Servicekonzept geeignete Mittel vorhanden sind, um die Gebühren abzudecken, die gegenüber der Versendeanwendung, der Empfangsanwendung oder beiden, d.h. der Versendeanwendung und der Empfangsanwendung, zu erheben sind.

5. System nach Anspruch 1, wobei die Versendeanwendung oder die Empfangsanwendung eine Unternehmensanwendung ist.

6. System nach Anspruch 1, wobei die Abrechnungsaufzeichnung ein Abrechnungsdatensatz (CDR = charging data record) ist, und das Modul zur Abrechnungsaufzeichnungserstellung den erstellten Abrechnungsdatensatz an ein Abrechnungssystem zur Bearbeitung überträgt.

7. Computerimplementiertes Verfahren, um die Abrechnung für das Routing über ein Netzwerk zu erleichtern, wobei das computerimplementierte Verfahren umfasst:
Empfangen, an einem Gateway (155, 175) einer Nachricht von einer Versendeanwendung gemäß einem Kommunikationsprotokoll, wobei die Versendeanwendung auf einer ersten Rechneranwendung (135, 140, 165) läuft, das Kommunikationsprotokoll ein Sitzungseinleitungsprotokoll (SIP) oder ein Kurznachrichten-Peer-To-Peer-Protokoll (SMPP) ist, und zum Umwandeln der empfangenen Nachricht in eine gemäß einem Mobiltelefon-Benachrichtigungsstandard formatierte und zu einer Empfangsanwendung zu leitende Nachricht;
Empfangen (305) der formatierten Nachricht an einem Screening-Modul (270) und Unterziehen (310) der formatierten Nachricht einer oder mehrerer Screening-Prüfungen, um zu bestimmen, ob die formatierte Nachricht zu der auf einer zweiten Rechnervorrichtung (210, 235, 240, 260) laufenden Empfangsanwendung geleitet werden soll, wobei die Screening-Prüfungen das Abfragen einer Konfigurationsentität zum Beurteilen der Fähigkeit der Empfangsanwendung Nachrichten zu empfangen, umfasst;
wenn das Screening-Modul (270) bestimmt, dass die empfangene Nachricht zu der Empfangsanwendung geleitet werden soll, Bestimmen (325), durch ein Routing-Modul (275), eines Routings der empfangenen Nachricht zu der Empfangsanwendung über ein verdrahtetes oder drahtloses Netzwerk;
Erstellen (330), durch ein Modul (270) zur Abrechnungsaufzeichnungserstellung, einer Abrechnungsaufzeichnung für das Routing der formatierten Nachricht zu der Empfangsanwendung, wobei die Abrechnungsaufzeichnung ermöglicht, dass gegenüber der Versendeanwendung, der Empfangsanwendung oder beiden, d.h. der Versendeanwendung und der Empfangsanwendung, Gebühren erhoben werden; und
Übertragen (335) der Abrechnungsaufzeichnung an ein Abrechnungssystem zur Bearbeitung.

8. Computerimplementiertes Verfahren nach Anspruch 7, wobei der Mobiltelefon-Benachrichtigungsstandard der Multimedia Messaging Service-Standard (MMS-Standard) oder der Short Message Services-Standard (SMS-Standard) ist.

9. Computerimplementiertes Verfahren nach Anspruch 7, wobei eine Screening-Prüfung die Bestimmung umfasst, ob die Versendeanwendung oder die Empfangsanwendung auf einer Negativliste oder einer Positivliste steht.

10. Computerimplementiertes Verfahren nach Anspruch 7, wobei eine Screening-Prüfung umfasst:
Bestimmen, ob die Versendeanwendung oder die Empfangsanwendung mit einem Prepaid-Servicekonzept in Verbindung steht; und
wenn die Versendeanwendung oder die Empfangsanwendung mit einem Prepaid-Servicekonzept in Verbindung steht, Bestimmen (415), ob in dem Prepaid-Servicekonzept geeignete Mittel vorhanden sind, um die Gebühren abzudecken, die gegenüber der Versendeanwendung, der Empfangsanwendung oder beiden, d.h. der Versendeanwendung und der Empfangsanwendung, zu erheben sind.

11. Computerimplementiertes Verfahren nach Anspruch 7, wobei die Versendeanwendung oder die Empfangsanwendung eine Unternehmensanwendung ist.

12. Computerimplementiertes Verfahren nach Anspruch 7, wobei die Abrechnungsaufzeichnung unmittelbar an das Abrechnungssystem zur Bearbeitung übertragen wird.

13. Computerimplementiertes Verfahren nach Anspruch 7, wobei die Abrechnungsaufzeichnung verzögert wird, bevor sie an das Abrechnungssystem zur Bearbeitung übertragen wird.

14. Computerimplementiertes Verfahren nach Anspruch 7, wobei die Abrechnungsaufzeichnung ein Abrechnungsdatensatz (CDR) ist.

15. Computerlesbares Speichermedium, das Anweisungen enthält, die, wenn sie von einem oder mehreren Prozessoren ausgeführt werden, die einen oder mehreren Prozessoren anweisen, ein Verfahren nach einem der Ansprüche 7 bis 14 durchzuführen.

## Revendications

1. Système pour faciliter la facturation de messages routés sur un réseau, le système comprenant :
une passerelle (155, 175) pour recevoir un message provenant d'une application d'envoi selon un protocole de communication, l'application d'envoi tournant sur un premier dispositif informatique (135, 140, 165), le protocole de communication étant un protocole d'initiation de session SIP, soit Session Initiation Protocol, ou un protocole de minimessages entre pairs SMPP, soit Short Message Peer-to-peer Protocol, et pour convertir le message reçu en un message formaté selon une norme de messagerie pour téléphonie mobile et à router vers une application de réception ;
un module de filtrage (270) pour recevoir le message formaté et pour appliquer une ou plusieurs vérifications de filtrage au message formaté de manière à déterminer si le message formaté doit être routé ou non vers l'application de réception tournant sur un deuxième dispositif informatique (210, 235, 240, 260), dans lequel les vérifications de filtrage comprennent une requête auprès d'une entité de configuration pour évaluer la capacité de l'application de réception à recevoir des messages ;
un module de routage (275) pour déterminer un routage du message formaté vers l'application de réception si le module de filtrage (270) détermine que le message reçu doit être routé vers l'application de réception, le module de routage (275) étant capable de router le message reçu via un réseau câblé ou sans fil ; et
un module de génération d'enregistrement de facturation (280) pour générer un enregistrement de facturation pour le routage du message formaté vers l'application de réception, l'enregistrement de facturation permettant une facturation auprès de l'application d'envoi, auprès de l'application de réception, ou aussi bien auprès de l'application d'envoi que de l'application de réception.

2. Système selon la revendication 1, dans lequel la norme de messagerie pour téléphonie mobile est la norme de service de messagerie multimédia MMS, soit Multimedia Messaging Service, ou la norme de service de minimessagerie SMS, soit Short Message Service.

3. Système selon la revendication 1, dans lequel une vérification de filtrage comprend la détermination du fait que l'application d'envoi ou l'application de réception se trouve ou non sur une liste noire ou sur une liste blanche.

4. Système selon la revendication 1, dans lequel une vérification de filtrage comprend :
la détermination du fait que l'application d'envoi ou l'application de réception est associée ou non à un plan de service prépayé ; et
si l'application d'envoi ou l'application de réception est associée à un plan de service prépayé, la détermination du fait que des fonds adéquats sont présents ou non dans le plan de service prépayé pour couvrir les frais à facturer auprès de l'application d'envoi, auprès de l'application de réception, ou aussi bien auprès de l'application d'envoi que de l'application de réception.

5. Système selon la revendication 1, dans lequel l'application d'envoi ou l'application de réception est une application d'entreprise.

6. Système selon la revendication 1, dans lequel l'enregistrement de facturation est un enregistrement de données de facturation CDR, soit Charging Data Record, et le module de génération d'enregistrement de facturation transmet l'enregistrement de données de facturation généré à un système de facturation pour son traitement.

7. Procédé mis en oeuvre par un ordinateur pour faciliter la facturation du routage sur un réseau, le procédé mis en oeuvre par un ordinateur comprenant :
la réception, sur une passerelle (155, 175), d'un message provenant d'une application d'envoi selon un protocole de communication, l'application d'envoi tournant sur un premier dispositif informatique (135, 140, 165), le protocole de communication étant un protocole d'initiation de session SIP ou un protocole de minimessages entre pairs SMPP, et convertissant le message reçu en un message formaté selon une norme de messagerie pour téléphonie mobile et à router vers une application de réception ;
la réception (305) du message formaté par un module de filtrage (270) et l'application (310) d'une ou plusieurs vérifications de filtrage au message formaté de manière à déterminer si le message formaté doit être routé ou non vers l'application de réception tournant sur un deuxième dispositif informatique (210, 235, 240, 260), dans lequel les vérifications de filtrage comprennent une requête auprès d'une entité de configuration pour évaluer la capacité de l'application de réception à recevoir des messages ;
si le module de filtrage (270) détermine que le message reçu doit être routé vers l'application de réception, la détermination (325), par un module de routage (275), d'un routage du message reçu vers l'application de réception via un réseau câblé ou sans fil ;
la génération (330), par un module de génération d'enregistrement de facturation (270), d'un enregistrement de facturation pour le routage du message formaté vers l'application de réception, l'enregistrement de facturation permettant une facturation auprès de l'application d'envoi, auprès de l'application de réception, ou aussi bien auprès de l'application d'envoi que de l'application de réception ; et
la transmission (335) de l'enregistrement de facturation à un système de facturation pour son traitement.

8. Procédé mis en oeuvre par un ordinateur selon la revendication 7, dans lequel la norme de messagerie pour téléphonie mobile est la norme de service de messagerie multimédia MMS ou la norme de service de minimessagerie SMS.

9. Procédé mis en oeuvre par un ordinateur selon la revendication 7, dans lequel une vérification de filtrage comprend la détermination du fait que l'application d'envoi ou l'application de réception se trouve ou non sur une liste noire ou sur une liste blanche.

10. Procédé mis en oeuvre par un ordinateur selon la revendication 7, dans lequel une vérification de filtrage comprend :
la détermination du fait que l'application d'envoi ou l'application de réception est associée ou non à un plan de service prépayé ; et
si l'application d'envoi ou l'application de réception est associée à un plan de service prépayé, la détermination (415) du fait que des fonds adéquats sont ou non présents dans le plan de service prépayé pour couvrir les frais qui doivent être facturés auprès de l'application d'envoi, auprès de l'application de réception, ou aussi bien auprès de l'application d'envoi que de l'application de réception.

11. Procédé mis en oeuvre par un ordinateur selon la revendication 7, dans lequel l'application d'envoi ou l'application de réception est une application d'entreprise.

12. Procédé mis en oeuvre par un ordinateur selon la revendication 7, dans lequel l'enregistrement de facturation est immédiatement transmis au système de facturation pour son traitement.

13. Procédé mis en oeuvre par un ordinateur selon la revendication 7, dans lequel l'enregistrement de facturation est retardé avant d'être transmis au système de facturation pour son traitement.

14. Procédé mis en oeuvre par un ordinateur selon la revendication 7, dans lequel l'enregistrement de facturation est un enregistrement de données de facturation CDR.

15. Support de stockage lisible par un ordinateur contenant des instructions qui, quand elles sont exécutées par un ou plusieurs processeurs, commandent auxdits un ou plusieurs processeurs de mettre en oeuvre un procédé selon l'une des revendications 7 à 14.
